# EUROPEAN PATENT APPLICATION

(11) **EP 4 786 221 A1**
(43) Date of publication of application: **05.08.2026**
(21) Application number: 24895447.1
(22) Date of filing: 20.05.2024
(51) Int. Cl.: B60H 1/00, H01M 10/613

(54) **HEAT EXCHANGER AND ENERGY STORAGE APPARATUS**

(30) Priority: 27.11.2023 CN 202311611606
(71) Applicant: Huawei Digital Power Technologies Co., Ltd., Shenzhen, Guangdong 518043 (CN)
(72) Inventor: WU, Yingwen, Shenzhen, Guangdong 518043 (CN); LI, Malin, Shenzhen, Guangdong 518043 (CN); LI, Quanming, Shenzhen, Guangdong 518043 (CN); WONG, Mingfung, Shenzhen, Guangdong 518043 (CN)
(74) Representative: Maiwald GmbH
(86) International application number: PCT/CN2024/094241
(87) International publication number: WO 2025/112337

(57) **Abstract**

This application provides a heat exchanger and an energy storage device. The heat exchanger includes at least one condenser plate heat exchanger, a plurality of evaporator plate heat exchangers, and a refrigerant substrate. Each evaporator plate heat exchanger and each condenser plate heat exchanger are arranged on a same side of the refrigerant substrate in a first direction. A side surface that is of each condenser plate heat exchanger and that faces the refrigerant substrate includes a condensation refrigerant outlet. A side surface that is of each evaporator plate heat exchanger and that faces the refrigerant substrate includes an evaporation refrigerant inlet. The refrigerant substrate includes a convergence flow channel and at least one flow distribution structure. Each flow distribution structure includes a plurality of flow distribution channels. One end of the convergence flow channel is configured to communicate with the condensation refrigerant outlet of each condenser plate heat exchanger. The other end of the convergence flow channel is configured to communicate with one end of each flow distribution channel. The other end of each flow distribution channel is configured to communicate with an evaporation refrigerant inlet of one evaporator plate heat exchanger. In the heat exchanger provided in this embodiment of this application, the flow distribution structure is provided on the refrigerant substrate. This reduces space occupied by the heat exchanger and simplifies assembly of the heat exchanger.

## Description

This application claims priority to Chinese Patent Application No. 202311611606.4, filed with the China National Intellectual Property Administration on November 27, 2023 and entitled "HEAT EXCHANGER AND ENERGY STORAGE DEVICE", which is incorporated herein by reference in its entirety.

### TECHNICAL FIELD

This application relates to the field of heat exchange technologies, and specifically, to a heat exchanger and an energy storage device.

### BACKGROUND

With vigorous development of new energy technologies, energy storage technologies attract increasing attention. Usually, a heat exchanger needs to be disposed in an energy storage device to provide heat or dissipate heat for the energy storage device, to ensure performance and safety of the energy storage device. However, an existing heat exchanger has a large size, leading to complex assembly. This is not conducive to arrangement of internal space of the energy storage device.

### SUMMARY

This application provides a heat exchanger and an energy storage device. The heat exchanger has a small size, leading to simple assembly. This facilitates arrangement of internal space of the energy storage device.

According to a first aspect, a heat exchanger is provided. The heat exchanger includes at least one condenser plate heat exchanger, a plurality of evaporator plate heat exchangers, and a refrigerant substrate. Each condenser plate heat exchanger and each evaporator plate heat exchanger are arranged on a same side of the refrigerant substrate in a first direction. A side surface that is of each condenser plate heat exchanger and that faces the refrigerant substrate includes a condensation refrigerant outlet. A side surface that is of each evaporator plate heat exchanger and that faces the refrigerant substrate includes an evaporation refrigerant inlet. The refrigerant substrate includes a convergence flow channel and at least one flow distribution structure. Each flow distribution structure includes a plurality of flow distribution channels. One end of the convergence flow channel is configured to communicate with the condensation refrigerant outlet of each condenser plate heat exchanger. The other end of the convergence flow channel is configured to communicate with one end of each flow distribution channel. The other end of each flow distribution channel is configured to communicate with an evaporation refrigerant inlet of one evaporator plate heat exchanger.

In the heat exchanger provided in this embodiment of this application, the flow distribution structure is provided on the refrigerant substrate, so that a problem of flow distribution of the plurality of evaporator plate heat exchangers can be resolved. Further, this reduces space occupied by the heat exchanger and simplifies assembly of the heat exchanger.

In addition, the flow distribution structure is provided on the refrigerant substrate, so that a problem of sealing between the flow distribution structure and the refrigerant substrate does not need to be considered. This reduces production costs of the heat exchanger. In addition, when the heat exchanger is in a vibrating environment, the flow distribution structure is not affected. This ensures heat exchange performance of the heat exchanger.

In an implementation, the refrigerant substrate includes two substrates that are arranged opposite to each other in the first direction. A side surface that is of one substrate and that faces the other substrate includes a convergence groove and at least one group of flow distribution grooves. Each group of flow distribution grooves includes a plurality of flow distribution grooves. The convergence groove communicates with each flow distribution groove. The convergence groove and a side surface that is of the other substrate and that faces the substrate form the convergence flow channel. Each flow distribution groove and the side surface that is of the other substrate and that faces the substrate form the flow distribution channel.

A groove is processed on one of the two substrates, so that the groove on one substrate and a surface of the other substrate can form a corresponding flow channel. This simplifies a processing process and an assembly process of the flow channel.

In an implementation, a cross section of each flow distribution groove is arc-shaped. In this way, a refrigerant in each flow distribution channel has small flow resistance and also has a small pressure drop.

In an implementation, each flow distribution structure further includes a flow distribution head channel. The flow distribution head channel is configured for the convergence flow channel to communicate with the plurality of flow distribution channels. A cross-sectional area of the flow distribution head channel first decreases and then increases in a direction in which the flow distribution head channel and each flow distribution channel are arranged.

After a refrigerant enters the flow distribution head channel, the refrigerant first shrinks slightly. Therefore, a speed increases, and pressure decreases. The speed reaches the maximum at a narrowest part of the flow distribution head channel. Then, the speed decreases, and the pressure increases. Like a nozzle, the refrigerant is sprayed into each flow distribution channel. Because the pressure is large, and a flow velocity of the refrigerant is high, refrigerants flowing into the flow distribution channels are even.

In an implementation, a cross-sectional area of each flow distribution channel is less than the cross-sectional area of the flow distribution head channel. In this way, the refrigerant in the flow distribution head channel can be distributed to the plurality of flow distribution channels.

In an implementation, an included angle between an axial direction of the flow distribution head channel and a second direction is *θ*₁ , 30° ≤ *θ*₁ ≤ 30°, and the second direction is perpendicular to the first direction. In this way, when the heat exchanger is placed in the second direction, uneven flow distribution caused by gravity can be avoided.

In an implementation, each flow distribution structure further includes a flow guiding partition plate. The flow guiding partition plate is configured to be embedded into the convergence flow channel. A gap exists at a joint between the flow guiding partition plate and each flow distribution channel. The flow guiding partition plate includes a flow guiding channel. The flow guiding channel is configured for the convergence flow channel to communicate with the gap.

After a refrigerant enters the flow guiding channel of the flow guiding partition plate, the refrigerant first shrinks slightly. Therefore, a speed increases, and pressure decreases. The speed reaches the maximum at a junction between an outlet of the flow guiding channel and the gap. Then, the speed decreases, and the pressure increases. Like a nozzle, the refrigerant is sprayed into each flow distribution channel. Because the pressure is large, and a flow velocity of the refrigerant is high, refrigerants flowing into the flow distribution channels are even.

In an implementation, a cross-sectional area of each flow distribution channel is less than a cross-sectional area of the convergence flow channel, and a distance between the flow guiding partition plate and an end that is of the convergence flow channel and that is away from the flow guiding partition plate is greater than the gap. In this way, a refrigerant in the convergence flow channel can be distributed to each flow distribution channel through the flow guiding channel in the flow guiding partition plate.

In an implementation, an included angle between an axial direction of the flow guiding channel and a second direction is *θ*₂, and 30° ≤ *θ*₂ ≤ 30°. In this way, when the heat exchanger is placed in the second direction, uneven flow distribution caused by gravity can be avoided.

In an implementation, lengths of the flow distribution channels are equal, and cross-sectional areas of the flow distribution channels are the same; or a length of one flow distribution channel is less than a length of another flow distribution channel, and a cross-sectional area of the one flow distribution channel is less than a cross-sectional area of the another flow distribution channel. This can ensure that pressure drops of the flow distribution channels are as similar as possible.

In an implementation, an included angle between an axial direction of the flow distribution channel and the second direction is *θ*₃, and 30° ≤ *θ*₃ ≤ 30°. In this way, when the heat exchanger is placed in the second direction, uneven flow distribution caused by gravity can be avoided.

In an implementation, the refrigerant substrate includes two side surfaces that are arranged back to each other in the second direction. Distances between one of the two side surfaces and joints between the flow distribution channels and the convergence flow channel are equal.

When the heat exchanger is placed in the second direction, the joints between the flow distribution channels and the convergence flow channel are aligned in a third direction. In this way, the refrigerant in the convergence flow channel can almost reach each flow distribution channel at the same time, so that the refrigerant is evenly distributed to the flow distribution channels.

In an implementation, the heat exchanger further includes at least one throttling element. Each throttling element is distributed in the convergence flow channel. Each throttling element is configured to control a flow rate flowing from the convergence flow channel into one flow distribution structure.

In an implementation, the throttling element is a throttling flow channel. The throttling flow channel is configured for the convergence flow channel to communicate with the flow distribution structure. A cross-sectional area of a joint between each throttling flow channel and the convergence flow channel is equal to a cross-sectional area of a joint between each throttling flow channel and the flow distribution structure. The throttling flow channel is processed on the refrigerant substrate, to implement a throttling function for the refrigerant in the convergence flow channel. This reduces production costs of the heat exchanger.

In an implementation, a cross-sectional area of a middle part of each throttling flow channel is less than the cross-sectional area of the joint between each throttling flow channel and the convergence flow channel and the cross-sectional area of the joint between each throttling flow channel and the flow distribution structure. In this way, after a refrigerant flows into the throttling flow channel, the refrigerant first shrinks slightly. Therefore, a speed increases, and pressure decreases. The speed reaches the maximum at a narrowest part of the middle part of the throttling flow channel. Then, the speed decreases, and the pressure increases. Like a nozzle, the refrigerant is sprayed into the flow distribution structure.

According to a second aspect, an energy storage device is provided. The energy storage device includes at least one battery cell and the heat exchanger according to any one of the first aspect and the possible implementations of the first aspect. The heat exchanger is configured to exchange heat with each battery cell.

Because the energy storage device includes the heat exchanger according to the first aspect, arrangement of internal space of the energy storage device is facilitated.

According to a third aspect, a photovoltaic power generation system is provided, including a photovoltaic panel, a photovoltaic inverter, and the energy storage device according to the second aspect. The photovoltaic panel is configured to convert solar energy into electric energy. Each battery cell is configured to store the electric energy from the photovoltaic panel. The photovoltaic inverter is configured to convert a direct current from the photovoltaic panel into an alternating current. The heat exchanger is further configured to exchange heat with the photovoltaic inverter.

Because the photovoltaic power generation system includes the heat exchanger according to the first aspect, arrangement of internal space of the photovoltaic power generation system is facilitated.

According to a fourth aspect, an electric vehicle is provided. The electric vehicle includes a powertrain and the energy storage device according to the second aspect. The energy storage device is configured to supply power to the powertrain.

Because the electric vehicle includes the heat exchanger according to the first aspect, arrangement of internal space of the electric vehicle is facilitated.

### BRIEF DESCRIPTION OF DRAWINGS

FIG. 1 is a diagram of an example photovoltaic power generation system according to an embodiment of this application;
FIG. 2 is a diagram of an example electric vehicle according to an embodiment of this application;
FIG. 3 is a diagram of a three-dimensional structure of an example heat exchanger according to an embodiment of this application;
FIG. 4 is a diagram of a three-dimensional structure of another example heat exchanger according to an embodiment of this application;
FIG. 5 is a diagram of a three-dimensional structure of an example condenser plate heat exchanger according to an embodiment of this application;
FIG. 6 is a diagram of a three-dimensional structure of an example evaporator plate heat exchanger according to an embodiment of this application;
FIG. 7 is a diagram of a two-dimensional structure of one substrate in an example refrigerant substrate according to an embodiment of this application;
FIG. 8 is a diagram of a two-dimensional structure of the other substrate in an example refrigerant substrate according to an embodiment of this application;
FIG. 9 is a diagram of a two-dimensional structure of one substrate in another example refrigerant substrate according to an embodiment of this application;
FIG. 10 is a diagram of a two-dimensional structure of the other substrate in another example refrigerant substrate according to an embodiment of this application;
FIG. 11 is a diagram of a two-dimensional structure of one substrate in still another example refrigerant substrate according to an embodiment of this application;
FIG. 12 is a diagram of a two-dimensional structure of one substrate in still another example refrigerant substrate according to an embodiment of this application;
FIG. 13 is a diagram of a two-dimensional structure of one substrate in still another example refrigerant substrate according to an embodiment of this application;
FIG. 14 is a diagram of a two-dimensional structure of the other substrate in still another example refrigerant substrate according to an embodiment of this application;
FIG. 15 is a diagram of a three-dimensional structure of one substrate in still another example refrigerant substrate according to an embodiment of this application;
FIG. 16 is an enlarged diagram of a part A of the other substrate shown in FIG. 15;
FIG. 17 is a diagram of a three-dimensional structure of one substrate in still another example refrigerant substrate according to an embodiment of this application;
FIG. 18 is an enlarged diagram of a part B of the other substrate shown in FIG. 17;
FIG. 19 is a diagram of a two-dimensional structure of one substrate in still another example refrigerant substrate according to an embodiment of this application; and
FIG. 20 is a diagram of a two-dimensional structure of an example refrigerant substrate according to an embodiment of this application.

### DESCRIPTION OF EMBODIMENTS

The following describes technical solutions in embodiments of this application with reference to accompanying drawings.

In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

Modifiers such as "first", "second", and "third" in embodiments of this application are merely intended to distinguish between different described objects, and do not constitute any limitation on positions, a sequence, priorities, quantities, content, or the like of the described objects. In embodiments of this application, modifiers such as an ordinal number used to distinguish between the described objects do not constitute any limitation on the described objects. For descriptions of the described objects, refer to descriptions of the context in the claims or embodiments. The modifiers should not constitute any unnecessary limitation. In the descriptions of embodiments, unless otherwise specified, "a plurality of" means two or more.

In embodiments of this application, an orientation or a position relationship indicated by the terms "above", "below", "left", "right", "front", "back", "top", "bottom", "inside", "outside", and the like is an orientation or a position relationship shown in the accompanying drawings, and is merely intended for ease of describing this application and simplifying description, but does not indicate or imply that a specified apparatus or element needs to have a specific orientation or be constructed and operated in a specific orientation. Therefore, such terms shall not be understood as a limitation on this application.

Reference to "some embodiments" or the like described in this specification means that one or more embodiments of this application include a specific feature, structure, or characteristic described with reference to embodiments. Therefore, statements such as "in some embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

"Perpendicular" in this application is not strictly perpendicular, but is within an allowed error range. "Parallel" is not strictly parallel, but is within an allowed error range.

In embodiments of this application, a same reference numeral represents a same component or a same part. In embodiments of this application, for a plurality of same parts, only one of the parts may be used as an example to mark a reference numeral in the accompanying drawings. For other same parts or components, reference numerals are also applicable. In addition, dimensions and sizes of the parts shown in the accompanying drawings are merely examples.

An embodiment of this application provides a heat exchanger. The heat exchanger includes at least one condenser plate heat exchanger, a plurality of evaporator plate heat exchangers, and a refrigerant substrate. Each evaporator plate heat exchanger and each condenser plate heat exchanger are arranged on a same side of the refrigerant substrate in a first direction. A side surface that is of each condenser plate heat exchanger and that faces the refrigerant substrate includes a condensation refrigerant outlet. A side surface that is of each evaporator plate heat exchanger and that faces the refrigerant substrate includes an evaporation refrigerant inlet. The refrigerant substrate includes a convergence flow channel and at least one flow distribution structure. Each flow distribution structure includes a plurality of flow distribution channels. One end of the convergence flow channel is configured to communicate with the condensation refrigerant outlet of each condenser plate heat exchanger. The other end of the convergence flow channel is configured to communicate with one end of each flow distribution channel. The other end of each flow distribution channel is configured to communicate with an evaporation refrigerant inlet of one evaporator plate heat exchanger.

In the heat exchanger provided in this embodiment of this application, the flow distribution structure is provided on the refrigerant substrate, so that a problem of flow distribution of the plurality of evaporator plate heat exchangers can be resolved. Further, this reduces space occupied by the heat exchanger and simplifies assembly of the heat exchanger.

In addition, the flow distribution structure is provided on the refrigerant substrate, so that a problem of sealing between the flow distribution structure and the refrigerant substrate does not need to be considered. This reduces production costs of the heat exchanger. In addition, when the heat exchanger is in a vibrating environment, the flow distribution structure is not affected. This ensures heat exchange performance of the heat exchanger.

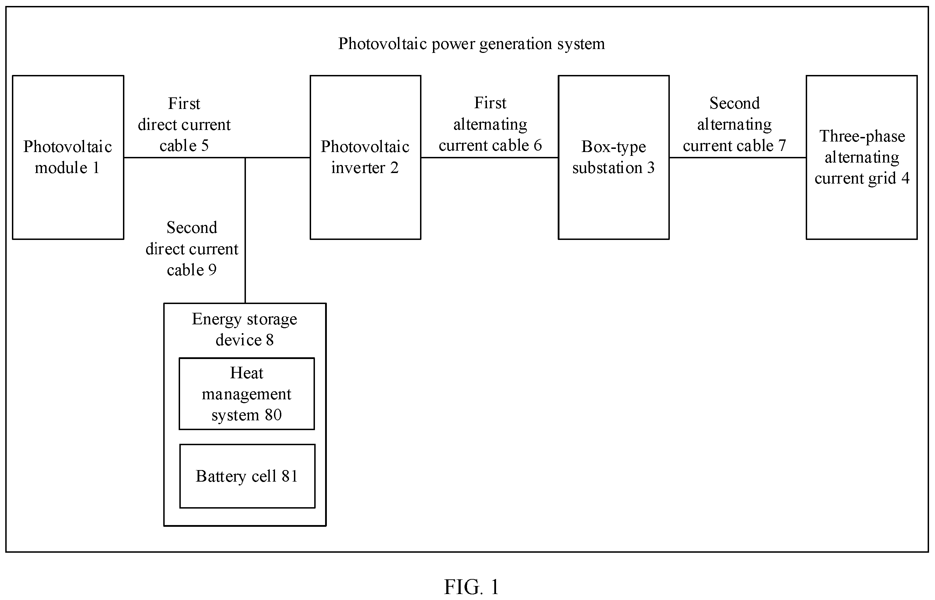

An embodiment of this application further provides a photovoltaic power generation system. The following describes in detail the photovoltaic power generation system provided in this embodiment of this application with reference to FIG. 1.

FIG. 1 is a diagram of a photovoltaic power generation system according to an embodiment of this application. As shown in FIG. 1, the photovoltaic power generation system provided in this embodiment of this application includes one or more photovoltaic modules 1, a photovoltaic inverter 2, a box-type substation 3, a three-phase alternating current grid 4, a first direct current cable 5, a first alternating current cable 6, a second alternating current cable 7, an energy storage device 8, and a second direct current cable 9. The one or more photovoltaic modules 1 are connected to the photovoltaic inverter 2 through the first direct current cable 5. A connection relationship between the photovoltaic module 1 and the photovoltaic inverter 2 may be a many-to-one connection. The energy storage device 8 is connected to the photovoltaic inverter 2 through the second direct current cable 5. The photovoltaic inverter 2 converts a direct current output by the photovoltaic module 1 or the energy storage device 8 into an alternating current. An alternating current side of the photovoltaic inverter 2 is connected to the box-type substation 3 through the first alternating current cable 6. The box-type substation 3 is connected to the three-phase alternating current grid 4 through the second alternating current cable 7. In this way, the alternating current output by the photovoltaic inverter 2 flows into the three-phase alternating current grid 4 after passing through the box-type substation 3.

The photovoltaic power generation system is a power generation system that converts solar radiation energy into electric energy through photovoltaic effect of a semiconductor material. The photovoltaic power generation system provided in this embodiment of this application can supply power to an electric vehicle. The electric vehicle includes a pure electric vehicle, a hybrid electric vehicle, a range extended electric vehicle, a plug-in hybrid electric vehicle, a new energy vehicle, or the like. The pure electric vehicle is also referred to as a pure electric vehicle/battery electric vehicle, or referred to as a pure EV/battery EV for short. The hybrid electric vehicle is also referred to as a hybrid electric vehicle, or referred to as an HEV for short. The range extended electric vehicle is also referred to as a range extended electric vehicle, or referred to as an REEV for short. The plug-in hybrid electric vehicle is also referred to as a plug-in hybrid electric vehicle, or referred to as a PHEV for short. The new energy vehicle is also referred to as a new energy vehicle, or referred to as an NEV for short.

The photovoltaic module 1 may also be referred to as a photovoltaic array, and includes a plurality of photovoltaic strings. Photovoltaic is also referred to as photovoltaic, or referred to as PV for short. A string is also referred to as a string. Each photovoltaic string includes a plurality of photovoltaic panels connected in series. The photovoltaic panel is configured to convert light energy into electric energy. The electric energy generated by the photovoltaic panel is a DC. Voltages at two ends of the photovoltaic string are equal to a sum of voltages generated by the plurality of photovoltaic panels. Output power of the photovoltaic module may represent electric energy output by the photovoltaic module per unit time.

In the photovoltaic power generation system, an area of each photovoltaic module 1 is usually fixed. When light intensity of light is unchanged, a larger included angle between light irradiated on the photovoltaic module 1 and a plane on which the photovoltaic module 1 is located, namely, a smaller incident angle of the light irradiated on the photovoltaic module 1, indicates more electric energy output by the photovoltaic module 1. When the light is vertically irradiated on the photovoltaic module 1, that is, when the included angle between the light and the plane on which the photovoltaic module 1 is located is 90°, that is, reaches the maximum, output power of the photovoltaic module 1 reaches the maximum.

Each photovoltaic inverter 2 is configured to convert an input DC into an AC, that is, perform DC-AC conversion. The photovoltaic inverter 2 may also be referred to as a DC-AC converter.

The box-type substation 3 is briefly referred to as a box-type substation 3, and is a compact power distribution device that integrates a high-voltage switchgear, a power distribution transformer, and a low-voltage power distribution apparatus based on a specific cable connection scheme. For example, the box-type substation 3 integrates devices such as a low-voltage cabinet, a transformer, a ring main unit, and an auxiliary power supply into a container, to provide a highly integrated power transformation and distribution solution for a medium-voltage grid-tied scenario of a ground photovoltaic power station.

The energy storage device 8 includes a heat management system 80 and at least one battery cell 81. The heat management system 80 is configured to exchange heat with each battery cell 81.

When the photovoltaic power generation system includes a plurality of photovoltaic modules 1, the photovoltaic power generation system further includes a combiner box. The combiner box is configured to combine direct currents generated by the plurality of photovoltaic modules 1, and input a combined direct current to the photovoltaic inverter 2.

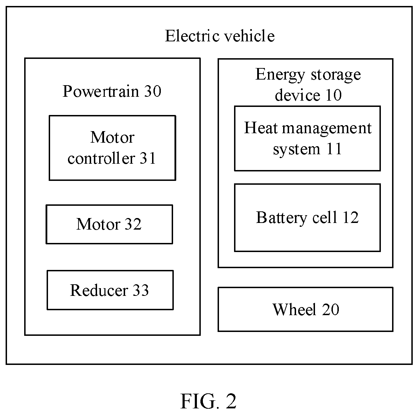

An embodiment of this application further provides an electric vehicle. The following describes in detail the electric vehicle provided in this embodiment of this application with reference to FIG. 2.

FIG. 2 is a diagram of an electric vehicle according to an embodiment of this application. As shown in FIG. 2, the electric vehicle provided in this embodiment of this application includes an energy storage device 10, a wheel 20, and one or more powertrains 30. The powertrain 30 is configured to receive power supplied by the energy storage device 10 and drive the wheel 20, and the powertrain 30 is configured to convert electric energy into mechanical energy.

The energy storage device 10 includes a heat management system 11 and at least one battery cell 12. The heat management system 80 is configured to exchange heat with each battery cell 12. The powertrain 30 includes a motor controller 31, a motor 32, and a reducer 33. The energy storage device 10 is connected to the motor controller 31 of the powertrain 30. The motor controller 31 receives, through a direct current input interface, a direct current transmitted by the battery cell 12. After converting the direct current into an alternating current, the motor controller 31 transmits the alternating current to a wiring terminal of a winding of the motor 32 through an alternating current output interface, to control starting or stopping, forward rotation or reverse rotation, increasing or decreasing of a rotation speed, increasing or decreasing of drive torque, increasing or decreasing of braking torque, or the like of the motor 32. An output end of a motor shaft transmits power to the wheel 20 of the electric vehicle through the reducer 33, to provide power for the wheel 20.

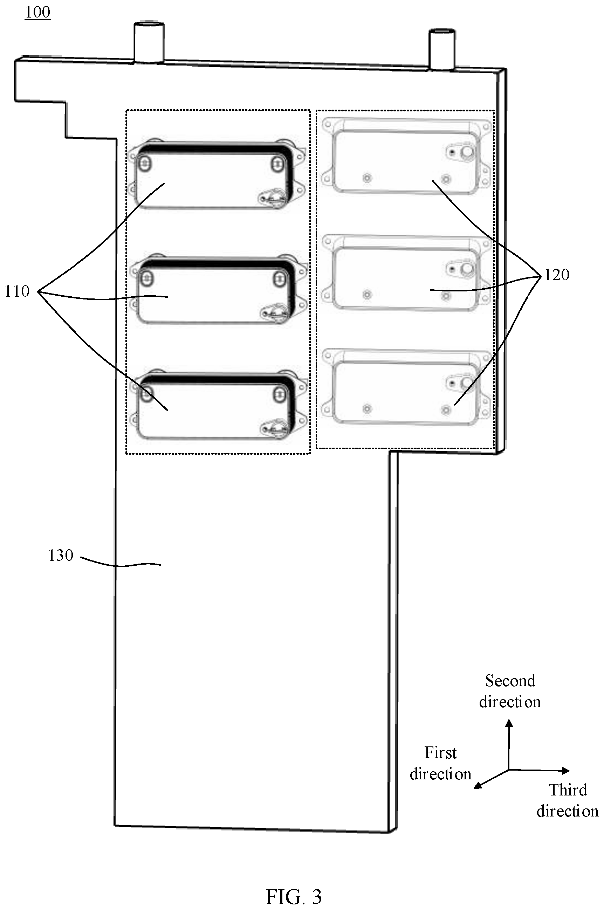

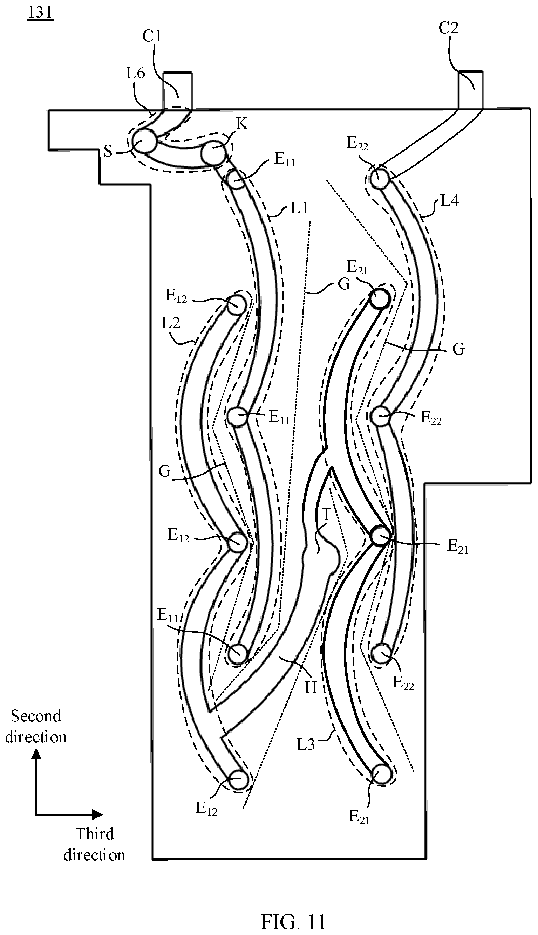

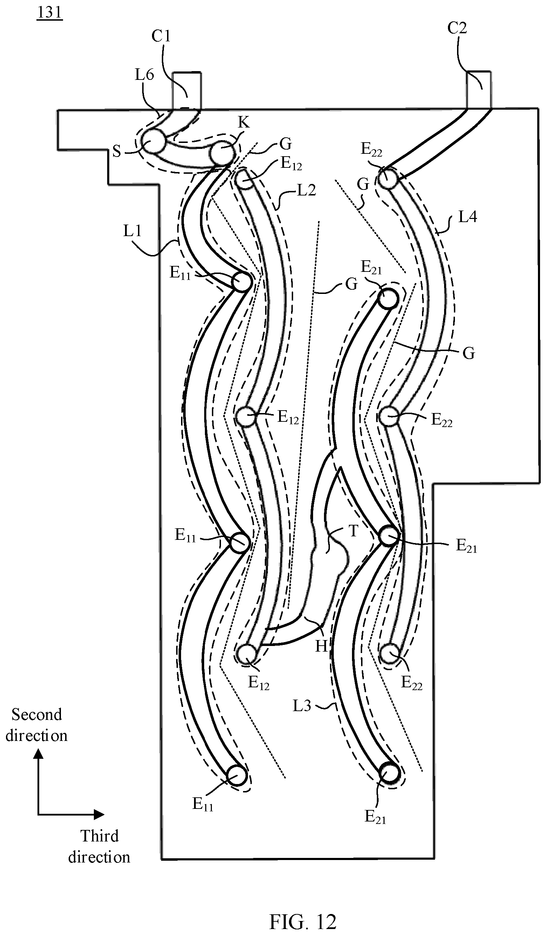

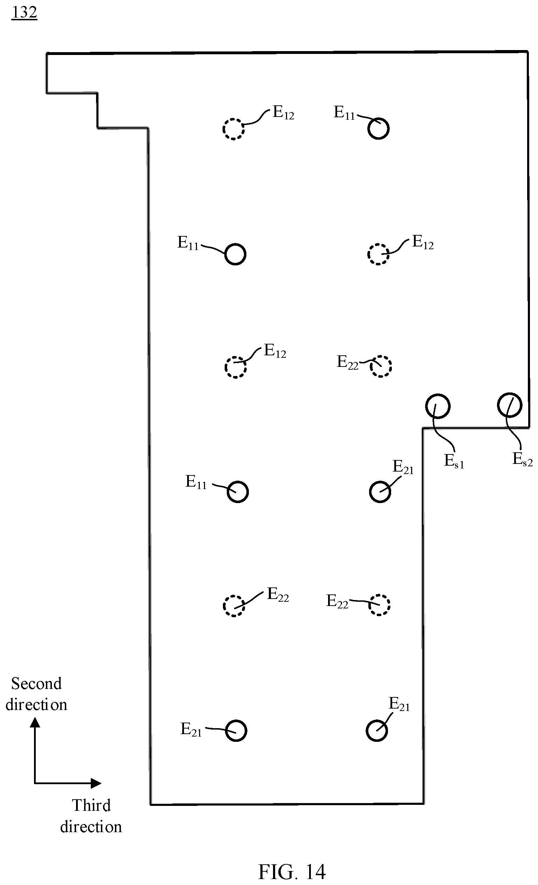

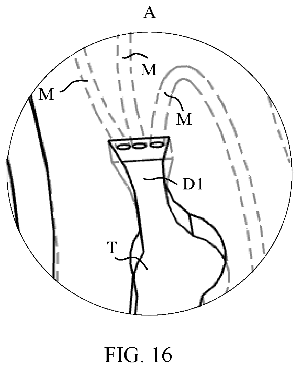

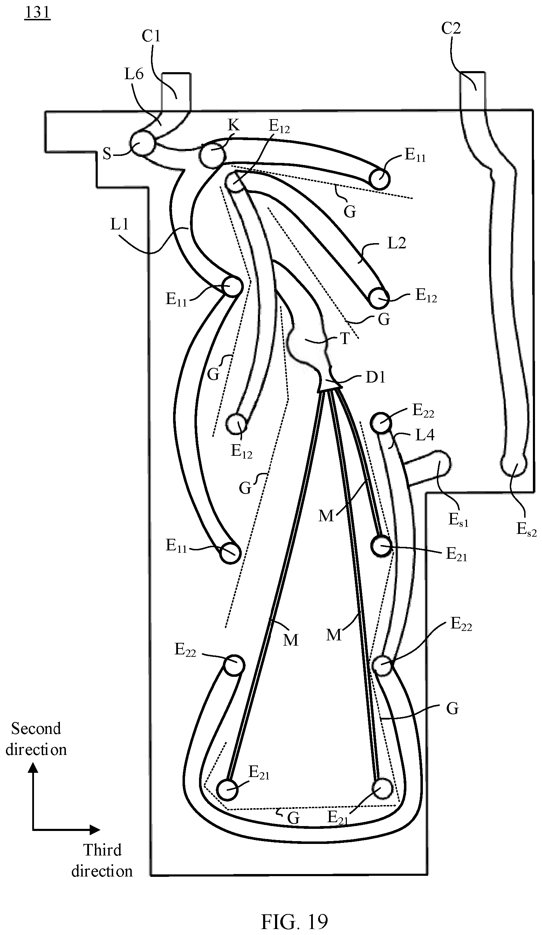

The heat management system 80 shown in FIG. 1 or the heat management system 11 shown in FIG. 2 includes a heat exchanger. The following describes in detail a specific structure of the heat exchanger provided in this embodiment of this application with reference to FIG. 3 to FIG. 20.

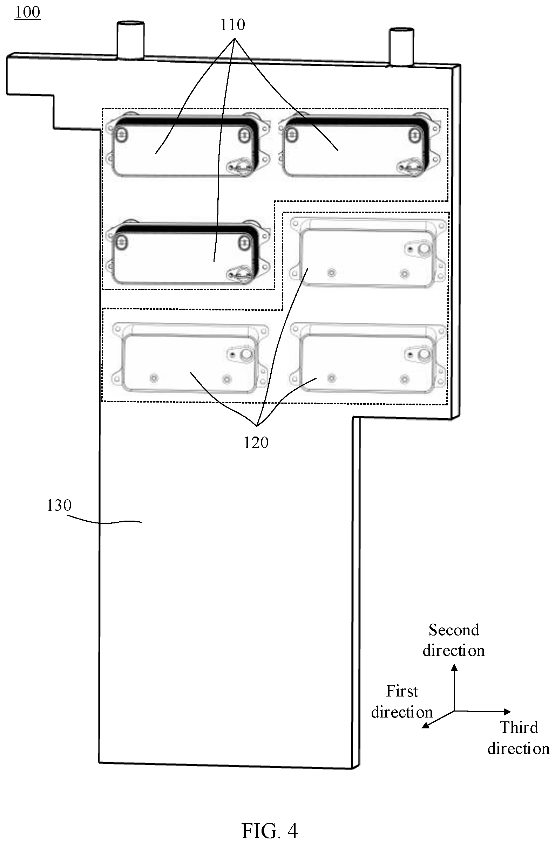

As shown in FIG. 3 and FIG. 4, a heat exchanger 100 includes at least one condenser plate heat exchanger 110, at least one evaporator plate heat exchanger 120, and a refrigerant substrate 130. Each condenser plate heat exchanger 110 and each evaporator plate heat exchanger 120 are arranged on a same side of the refrigerant substrate in a first direction. In an embodiment in which the heat exchanger 100 includes a plurality of condenser plate heat exchangers 110 and a plurality of evaporator plate heat exchangers 120, plate heat exchangers (the condenser plate heat exchangers 110 and the evaporator plate heat exchangers 120) are highly integrated, so that a large heat exchange capacity of the heat exchanger 100 can be implemented.

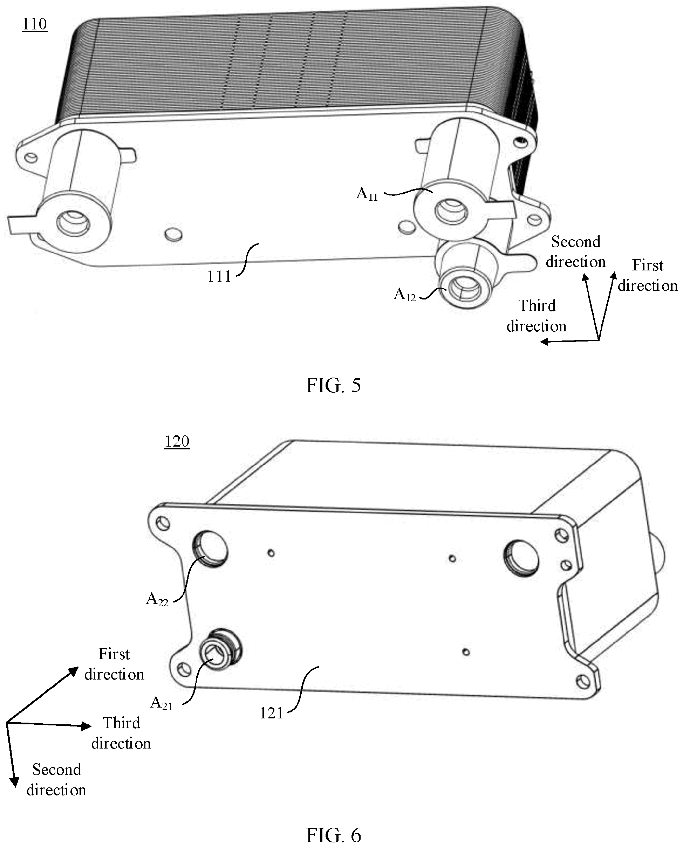

Each condenser plate heat exchanger 110 includes a plurality of condensation substrates. The plurality of condensation substrates are spaced from each other in a thickness direction of the condensation substrate. As shown in FIG. 5, a side surface 111 of each condenser plate heat exchanger 110 includes a condensation refrigerant inlet A₁₁ and a condensation refrigerant outlet A₁₂. The condensation refrigerant inlet A₁₁ and the condensation refrigerant outlet A₁₂ are arranged in a second direction. In some embodiments, to facilitate communication between the condensation refrigerant inlet A₁₁ and the condensation refrigerant outlet A₁₂ of each condenser plate heat exchanger 110 and condensation refrigerant flow channels on the refrigerant substrate 130, the condensation refrigerant inlet A₁₁ and the condensation refrigerant outlet A₁₂ are aligned in the second direction. In other words, the condensation refrigerant inlet A₁₁ and the condensation refrigerant outlet A₁₂ are almost located in a straight line in the second direction. In some embodiments, to prevent heat transfer between the refrigerant substrate 130 and each condenser plate heat exchanger 110, a gap is provided between a side surface 111 of each condenser plate heat exchanger 110 and a side surface that is of the refrigerant substrate 130 and that faces the condenser plate heat exchanger 110. For example, the gap may range from 1 mm to 10 mm.

Each evaporator plate heat exchanger 120 includes a plurality of evaporation substrates. The plurality of evaporation substrates are spaced from each other in a thickness direction of the evaporation substrate. As shown in FIG. 6, a side surface 121 of each evaporator plate heat exchanger 120 includes an evaporation refrigerant inlet A₂₁ and an evaporation refrigerant outlet A₂₂. The evaporation refrigerant inlet A₂₁ and the evaporation refrigerant outlet A₂₂ are arranged in the second direction. In some embodiments, to facilitate communication between the evaporation refrigerant inlet A₂₁ and the evaporation refrigerant outlet A₂₂ of each evaporator plate heat exchanger 120 and evaporation refrigerant flow channels on the refrigerant substrate 130, the evaporation refrigerant inlet A₂₁ and the evaporation refrigerant outlet A₂₂ are aligned in the second direction. In other words, the evaporation refrigerant inlet A₂₁ and the evaporation refrigerant outlet A₂₂ are almost located in a straight line in the second direction. In some embodiments, to prevent heat transfer between the refrigerant substrate 130 and each evaporator plate heat exchanger 120, a gap is provided between a side surface 111 of each condenser plate heat exchanger 110 and the side surface that is of the refrigerant substrate 130 and that faces the condenser plate heat exchanger 110. For example, the gap may range from 1 mm to 10 mm.

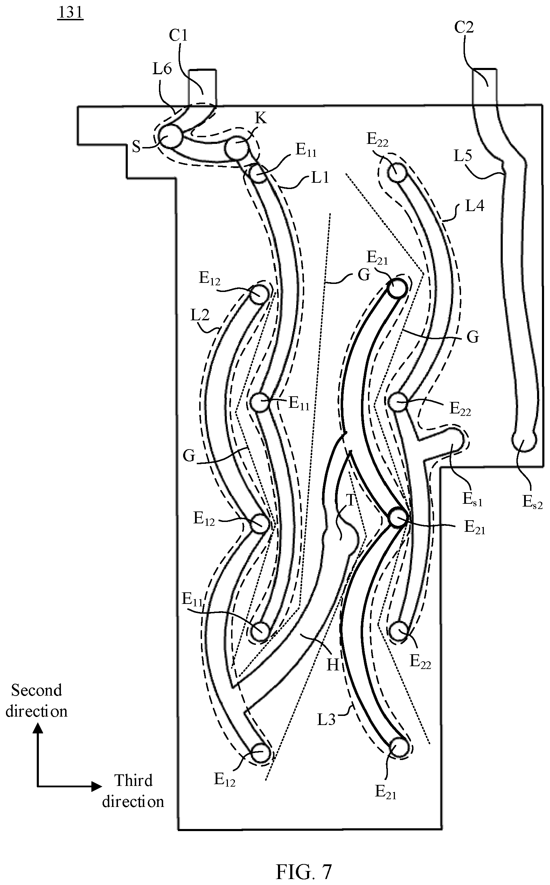

As shown in FIG. 7, FIG. 9, and FIG. 11 to FIG. 13, the side surface that is of the refrigerant substrate 130 and that faces the condenser plate heat exchanger 110 includes two groups of condensation holes E₁₁ and E₁₂ and two groups of evaporation holes E₂₁ and E₂₂. The refrigerant substrate 130 includes two condensation refrigerant flow channels L1 and L2, two evaporation refrigerant flow channels L3 and L4, and a convergence flow channel H inside. In the first direction, each condensation hole E₁₁ in one group of condensation holes overlaps a projection of one condensation refrigerant flow channel L1, each condensation hole E₁₂ in the other group of condensation holes overlaps a projection of the other condensation refrigerant flow channel L2, each evaporation hole E₂₁ in one group of evaporation holes overlaps a projection of one evaporation refrigerant flow channel L3, and each evaporation hole E₂₂ in the other group of evaporation holes overlaps a projection of the other evaporation refrigerant flow channel L4.

Each group of condensation holes includes at least one condensation hole. Each condensation hole E₁₁ in the group of condensation holes is configured for the one condensation refrigerant flow channel L1 to communicate with a condensation refrigerant inlet A₁₁ of one condenser plate heat exchanger 110, and each condensation hole E₁₂ in the other group of condensation holes is configured for the other condensation refrigerant flow channel L2 to communicate with a condensation refrigerant outlet A₁₂ of the condenser plate heat exchanger 110. In this way, the plurality of condenser plate heat exchangers 110 are connected in parallel to each condensation refrigerant flow channel.

Each group of evaporation holes includes at least one evaporation hole. Each evaporation hole E₂₁ in the group of evaporation holes is configured for the one evaporation refrigerant flow channel L3 to communicate with an evaporation refrigerant inlet A₂₁ of one evaporator plate heat exchanger 120, and each evaporation hole E₂₂ in the other group of evaporation holes is configured for the other evaporation refrigerant flow channel L4 to communicate with an evaporation refrigerant outlet A₂₂ of the evaporator plate heat exchanger 120. In this way, the plurality of evaporator plate heat exchangers 120 are connected in parallel to each evaporation refrigerant flow channel.

The convergence flow channel H is configured for the other condensation refrigerant flow channel L2 to communicate with the one evaporation refrigerant flow channel L3. In this way, a refrigerant in the one condensation refrigerant flow channel L1 can flow into each condenser plate heat exchanger 110 through the condensation refrigerant inlet A₁₁ of each condenser plate heat exchanger 110, and flow into the other condensation refrigerant flow channel L2 through the condensation refrigerant outlet A₁₂ of each condenser plate heat exchanger 110. The refrigerant flows into the one evaporation refrigerant flow channel L3 through the convergence flow channel H that communicates with the other condensation refrigerant flow channel L2. The refrigerant in the one evaporation refrigerant flow channel L3 can flow into each evaporator plate heat exchanger 120 through the evaporation refrigerant inlet A₂₁ of each evaporator plate heat exchanger 120, and flow into the other evaporation refrigerant flow channel L4 through the evaporation refrigerant outlet A₂₂ of each evaporator plate heat exchanger 120.

A quantity of condensation holes in each group is equal to a quantity of condenser plate heat exchangers 110. A quantity of evaporation holes in each group is equal to a quantity of evaporator plate heat exchangers 120. In FIG. 3 to FIG. 18, an example in which the heat exchanger 100 includes three condenser plate heat exchangers 110 and three evaporator plate heat exchangers 120 is used. This should not constitute any limitation on this application.

In some embodiments, as shown in FIG. 3, the plurality of condenser plate heat exchangers 110 and the plurality of evaporator plate heat exchangers 120 are spaced from each other in a third direction. In other words, the plurality of condenser plate heat exchangers 110 are located on a left side, and the plurality of evaporator plate heat exchangers 120 are located on a right side. Further, the plurality of condenser plate heat exchangers 110 are spaced from each other in the second direction, and the plurality of evaporator plate heat exchangers 120 are spaced from each other in the second direction. In some other embodiments, as shown in FIG. 4, the plurality of condenser plate heat exchangers 110 and the plurality of evaporator plate heat exchangers 120 are spaced from each other in the second direction. In other words, the plurality of condenser plate heat exchangers 110 are located above, and the plurality of evaporator plate heat exchangers 120 are located below, or the plurality of condenser plate heat exchangers 110 are located below, and the plurality of evaporator plate heat exchangers 120 are located above. In this way, based on deployment manners of the plurality of condenser plate heat exchangers 110 and the plurality of evaporator plate heat exchangers 120, the condensation refrigerant flow channels that are on the refrigerant substrate 130 and that communicate with each condenser plate heat exchanger 110 are provided on a same side, and the evaporation refrigerant flow channels that are on the refrigerant substrate 130 and that communicate with each evaporator plate heat exchanger 120 are provided on another side. This facilitates assembly of the condenser plate heat exchanger 110 and the evaporator plate heat exchanger 120, and a design of refrigerant flow channels. In addition, in an embodiment, the plurality of condenser plate heat exchangers 110 are located above, and the plurality of evaporator plate heat exchangers 120 are located below. This helps reduce a pressure drop of a gas-liquid two-phase refrigerant caused by gravity, and improve performance of the heat exchanger 100.

It should be noted that the first direction in embodiments of this application may be understood as a front-back direction of the heat exchanger 100, the thickness direction of the condensation substrate, the thickness direction of the evaporation substrate, or a thickness direction of the refrigerant substrate 130. The second direction may be understood as an up-down direction of the heat exchanger 100 or a length direction of the refrigerant substrate 130. The third direction may be understood as a left-right direction of the heat exchanger 100 or a width direction of the refrigerant substrate 130.

In addition, a refrigerant (Refrigerant) in this application may also be referred to as a coolant or a cooling agent, and is a medium used to complete energy conversion in various heat engines. The medium usually undergoes a reversible phase transition (for example, a gas-liquid phase transition) to increase power.

In this application, the refrigerant is a working fluid used to transfer heat energy and generate freezing effect. In other words, the refrigerant may transfer heat through evaporation and condensation. The refrigerant may be a substance that easily absorbs heat to change into gas and also easily releases heat to change into liquid. For example, the refrigerant is an intermediate substance in a cooling process, absorbs a cooling capacity of a refrigerant to decrease a temperature, and then cools another cooled substance. By way of example, and not limitation, in this application, the refrigerant may include ammonia, air, water, salt water, chlorofluorocarbon (or referred to as chlorofluorocarbon), and the like. In this application, when being pressurized, a gaseous refrigerant releases heat and changes into liquid, and when being depressurized and changing into gas, high-pressure liquid absorbs heat.

Position relationships between the one condensation refrigerant flow channel L1, the other condensation refrigerant flow channel L2, the one evaporation refrigerant flow channel L3, and the other evaporation refrigerant flow channel L4 are related to a position relationship between the condenser plate heat exchanger 110 and the evaporator plate heat exchanger 120. In this way, pipelines that are on the plurality of condenser plate heat exchangers 110 and that communicate with the two condensation refrigerant flow channels L1 and L2 and pipelines that are on the plurality of evaporator plate heat exchangers 120 and that communicate with the two evaporation refrigerant flow channels L3 and L4 are deployed regularly. This simplifies an assembly process of the plurality of condenser plate heat exchangers 110 and the two condensation refrigerant flow channels L1 and L2 and an assembly process of the plurality of evaporator plate heat exchangers 110 and the two evaporation refrigerant flow channels L3 and L4.

In an example, as shown in FIG. 3, the plurality of condenser plate heat exchangers 110 and the plurality of evaporator plate heat exchangers 120 are spaced from each other in the third direction. As shown in FIG. 7, FIG. 9, FIG. 11, and FIG. 12, the one condensation refrigerant flow channel L1, the other condensation refrigerant flow channel L2, the one evaporation refrigerant flow channel L3, and the other evaporation refrigerant flow channel L4 are arranged in the third direction.

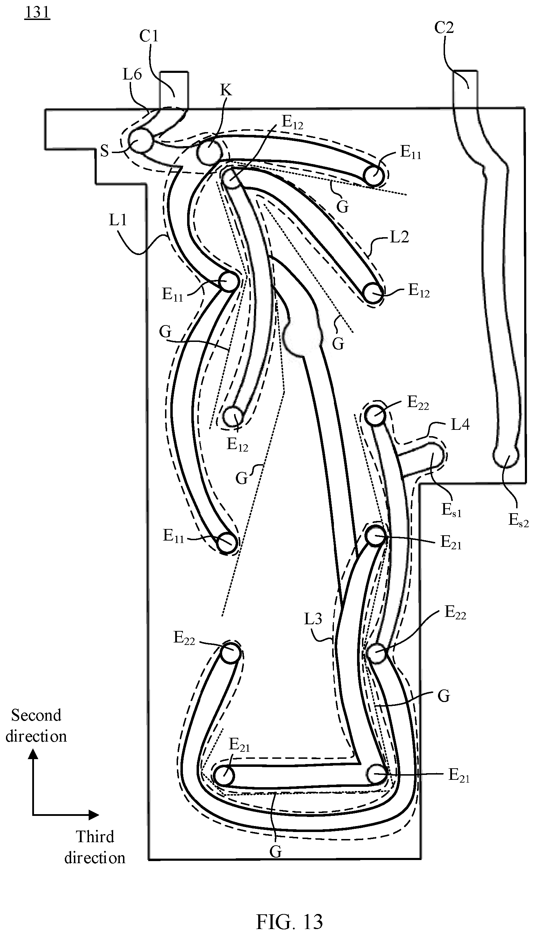

In another example, as shown in FIG. 4, the plurality of condenser plate heat exchangers 110 and the plurality of evaporator plate heat exchangers 120 are arranged in the second direction. As shown in FIG. 13, the one condensation refrigerant flow channel L1, the other condensation refrigerant flow channel L2, the one evaporation refrigerant flow channel L3, and the other evaporation refrigerant flow channel L4 are arranged in the second direction.

It should be noted that, that the plurality of condenser plate heat exchangers 110 and the plurality of evaporator plate heat exchangers 120 are arranged in the second direction may be understood as that all condenser plate heat exchangers 110 and all evaporator plate heat exchangers 120 of the heat exchanger 100 are arranged in the second direction. If there is an odd quantity of condenser plate heat exchangers 110 or an odd quantity of evaporator plate heat exchangers 120, as shown in FIG. 4, one condenser plate heat exchanger 110 and one evaporator plate heat exchanger 120 may be arranged adjacent to each other in the third direction, but all condenser plate heat exchangers 110 and all evaporator plate heat exchangers 120 of the heat exchanger 100 are arranged in the second direction. In other words, it may also be understood that in this example, the plurality of condenser plate heat exchangers 110 and the plurality of evaporator plate heat exchangers 120 are arranged in the second direction.

An extension direction of the one condensation refrigerant flow channel L1, an extension direction of the other condensation refrigerant flow channel L2, an arrangement direction of a plurality of condensation holes E₁₁ in the group of condensation holes, and an arrangement direction of a plurality of condensation holes E₁₂ in the other group of condensation holes are separately related to a position relationship between the plurality of condenser plate heat exchangers 110. For example, as shown in FIG. 3, the plurality of condenser plate heat exchangers 110 are arranged in the second direction. As shown in FIG. 7, FIG. 9, FIG. 11, and FIG. 12, the extension direction of the one condensation refrigerant flow channel L1, the extension direction of the other condensation refrigerant flow channel L2, the arrangement direction of the plurality of condensation holes E₁₁ in the group of condensation holes, and the arrangement direction of the plurality of condensation holes E₁₂ in the other group of condensation holes are separately set in the second direction.

An extension direction of the one evaporation refrigerant flow channel L3, an extension direction of the other evaporation refrigerant flow channel L4, an arrangement direction of a plurality of evaporation holes E₂₁ in the group of evaporation holes, and an arrangement direction of a plurality of evaporation holes E₂₂ in the other group of evaporation holes are separately related to a position relationship between the plurality of evaporator plate heat exchangers 120. For example, as shown in FIG. 3, the plurality of evaporator plate heat exchangers 120 are arranged in the second direction. As shown in FIG. 7, FIG. 9, FIG. 11, and FIG. 12, the extension direction of the one evaporation refrigerant flow channel L3, the extension direction of the other evaporation refrigerant flow channel L4, the arrangement direction of the plurality of evaporation holes E₂₁ in the group of evaporation holes, and the arrangement direction of the plurality of evaporation holes E₂₂ in the other group of evaporation holes are separately set in the second direction.

It should be noted that, as shown in FIG. 7, FIG. 9, and FIG. 11 to FIG. 13, a shortest path for the one condensation refrigerant flow channel L1 to communicate with the plurality of condensation holes E₁₁ in the group of condensation holes is used as an example, a shortest path for the other condensation refrigerant flow channel L2 to communicate with the plurality of condensation holes E₁₂ in the other group of condensation holes is used as an example, a shortest path for the one evaporation refrigerant flow channel L3 to communicate with the plurality of condensation holes E₂₁ in the group of evaporation holes is used as an example, and a shortest path for the other evaporation refrigerant flow channel L4 to communicate with the plurality of evaporation holes E₂₂ in the other group of evaporation holes is used as an example. This should not constitute any limitation on this application.

In some embodiments, an included angle between a connection line between two adjacent condensation holes in the two groups of condensation holes and the second direction is *α*₁, and 0° ≤ *α*₁ ≤ 45°. This can ensure a shortest flow path and low flow resistance of a refrigerant in each of the two condensation refrigerant flow channels L1 and L2.

For example, as shown in FIG. 7 to FIG. 12, all condensation holes E₁₁ and E₁₂ in the two groups of condensation holes are almost located in a straight line in the second direction. In other words, an included angle between a connection line between two adjacent condensation holes in the two groups of condensation holes and the second direction is approximately 0°.

In some embodiments, an included angle between a connection line between two adjacent condensation holes in the two groups of evaporation holes and the second direction is *α*₂, and 0° ≤ *α*₂ ≤ 45°. This can ensure a shortest flow path and low flow resistance of a refrigerant in each of the two evaporation refrigerant flow channels L3 and L4.

For example, as shown in FIG. 7 to FIG. 12, all evaporation holes E₂₁ and E₂₂ in the two groups of evaporation holes are almost located in a straight line in the second direction. In other words, an included angle between a connection line between two adjacent condensation holes in the two groups of evaporation holes and the second direction is approximately 0°.

It should be noted that the included angle between the connection line and the second direction in this embodiment of this application may be understood as an included angle between the connection line and the second direction in a clockwise direction or a counterclockwise direction.

In some embodiments, the other condensation refrigerant flow channel L2 and the one evaporation refrigerant flow channel L3 are separately distributed between the one condensation refrigerant flow channel L1 and the other evaporation refrigerant flow channel L4. In this way, the one condensation refrigerant flow channel L1 for transmitting a high-temperature and high-pressure refrigerant and the other evaporation refrigerant flow channel L4 are arranged on an edge of the condensation substrate 130, to reduce a loss caused by heat transfer between the high-temperature and high-pressure refrigerant and a refrigerant in the other condensation refrigerant flow channel L2 and a loss caused by heat transfer between the high-temperature and high-pressure refrigerant and a refrigerant in the one evaporation refrigerant flow channel L3.

In some embodiments, cross-sectional areas of the two evaporation refrigerant flow channels are respectively greater than cross-sectional areas of the two condensation refrigerant flow channels. Most refrigerants flowing in a condensation refrigerant flow channel are liquid, most refrigerants flowing in an evaporation refrigerant flow channel are gaseous, and flow resistance of the liquid refrigerant is less than flow resistance of the gaseous refrigerant. Therefore, setting a cross-sectional area of the evaporation refrigerant flow channel to be larger than a cross-sectional area of the condensation refrigerant flow channel can increase a pressure drop of the refrigerant flowing in the evaporation refrigerant flow channel.

In some embodiments, a cross-sectional area of the one condensation refrigerant flow channel L1 is greater than a cross-sectional area of the other condensation refrigerant flow channel L2. A quantity of liquid refrigerants flowing in the other condensation refrigerant flow channel L2 is greater than a quantity of liquid refrigerants flowing in the one condensation refrigerant flow channel L1, and flow resistance of the refrigerant flowing in the other condensation refrigerant flow channel L2 is less than flow resistance of the refrigerant flowing in the one condensation refrigerant flow channel L1. Therefore, setting the cross-sectional area of the one condensation refrigerant flow channel L1 to be larger than the cross-sectional area of the other condensation refrigerant flow channel L2 can increase a pressure drop of the refrigerant flowing in the one condensation refrigerant flow channel L1.

In some embodiments, a cross-sectional area of the other evaporation refrigerant flow channel L4 is greater than a cross-sectional area of the one evaporation refrigerant flow channel L3. A quantity of liquid refrigerants flowing in the other evaporation refrigerant flow channel L4 is less than a quantity of liquid refrigerants flowing in the one evaporation refrigerant flow channel L3, and flow resistance of the refrigerant flowing in the other evaporation refrigerant flow channel L4 is greater than flow resistance of the refrigerant flowing in the one evaporation refrigerant flow channel L3. Therefore, setting the cross-sectional area of the other evaporation refrigerant flow channel L4 to be larger than the cross-sectional area of the one evaporation refrigerant flow channel L3 can increase a pressure drop of the refrigerant flowing in the other evaporation refrigerant flow channel L4.

It should be noted that a cross section of a flow channel in this application may be understood as a cross section perpendicular to an extension direction of the flow channel.

In some embodiments, as shown in FIG. 7, FIG. 9, and FIG. 11 to FIG. 13, the heat exchanger 100 further includes at least one throttling element. Each throttling element is distributed in the convergence flow channel H. Each throttling element is configured to control a flow rate flowing from the convergence flow channel H to the one evaporation refrigerant flow channel L3.

For example, a projection of the throttling element is arranged between a total projection of the plurality of condenser plate heat exchangers 110 and a total projection of the plurality of evaporation substrates 120 in the first direction.

In some embodiments, the throttling element implements a throttling function by using a component. For example, the throttling element may be a component that can implement a throttling function, for example, an electronic expansion valve (electronic expansion valve, EEV) or a thermostatic expansion valve. In this embodiment, as shown in FIG. 7, FIG. 9, and FIG. 11 to FIG. 13, the refrigerant substrate 130 further includes a throttling hole T. The throttling hole T is configured to be embedded into the throttling element.

In some embodiments, the throttling element implements the throttling function through a structural design. The throttling element is a throttling flow channel. The throttling flow channel is configured for the convergence flow channel H to communicate with the one evaporation refrigerant flow channel L3. A cross-sectional area of a joint between each throttling flow channel and the convergence flow channel H is equal to a cross-sectional area of a joint between each throttling flow channel and the one evaporation refrigerant flow channel L3.

In some embodiments, a cross-sectional area of a middle part of each throttling flow channel is less than the cross-sectional area of the joint between each throttling flow channel and the convergence flow channel H and the cross-sectional area of the joint between each throttling flow channel and the one evaporation refrigerant flow channel L3.

In some embodiments, in an arrangement direction of an inlet and an outlet of the throttling flow channel, a cross-sectional area of the throttling flow channel first decreases and then increases. The joint between the throttling flow channel and the convergence flow channel may be referred to as the inlet of the throttling flow channel, and the joint between the throttling flow channel and the one evaporation refrigerant flow channel L3 may be referred to as the outlet of the throttling flow channel.

In some embodiments, as shown in FIG. 7, FIG. 9, and FIG. 11 to FIG. 13, a notch G may be further provided between at least one of the following: between the two condensation refrigerant flow channels, between the two evaporation refrigerant flow channels, between the other condensation refrigerant flow channel and the one evaporation refrigerant flow channel, or between an inlet and an outlet of the throttling element. In this way, air isolation is formed at the notch G. This can reduce heat transferred between refrigerants in the refrigerant flow channels through the refrigerant substrate 130, implement low heat leakage of the heat exchanger 100, and ensure high heat exchange performance of the heat exchanger 100. In addition, the notch G is provided only between the two condensation refrigerant flow channels and/or between the two evaporation refrigerant flow channels, that is, the notch G is provided only at a region that is of the substrate and that contributes most to heat leakage. This not only simplifies a process step, but also ensures structural strength of the refrigerant substrate 130.

For example, the notch G may be formed by cutting the refrigerant substrate 130, and may be a straight line or a curve.

In some embodiments, a length of the notch G is greater than or equal to a length of each refrigerant flow channel, and the length of the notch G is greater than a width of the throttling element T. This can improve effect of heat insulation between the refrigerant flow channels.

For example, the notch G may be a groove, a gap, or a scratch.

In some embodiments, the refrigerant substrate 130 further includes a heat insulation material. The heat insulation material is distributed between at least one of the following: between the two condensation refrigerant flow channels, between the two evaporation refrigerant flow channels, between the other condensation refrigerant flow channel and the one evaporation refrigerant flow channel, or between an inlet and an outlet of the throttling element. In this way, the heat insulation material can reduce heat transferred between refrigerants in the refrigerant flow channels through the refrigerant substrate 130, implement low heat leakage of the heat exchanger 100, and ensure high heat exchange performance of the heat exchanger 100.

An embodiment of this application further provides a flow distribution structure. The flow distribution structure is provided on a refrigerant substrate 130. The flow distribution structure is configured to distribute refrigerants in all condenser plate heat exchangers 110 into each evaporator plate heat exchanger 120. In this way, because the flow distribution structure is directly disposed on the refrigerant substrate 130, space occupied by a heat exchanger 100 is reduced, assembly of the heat exchanger 100 is simplified, and a problem of sealing between the flow distribution structure and the refrigerant substrate does not need to be considered. In addition, when the heat exchanger 100 is in a vibrating environment, the flow distribution structure is not affected.

It should be noted that, in an embodiment in which the flow distribution structure is disposed on the refrigerant substrate 130, the one condensation refrigerant flow channel L1, the other condensation refrigerant flow channel L2, the one evaporation refrigerant flow channel L3, and the other evaporation refrigerant flow channel L4 described above may be provided on the refrigerant substrate 130, or the one condensation refrigerant flow channel L1, the other condensation refrigerant flow channel L2, the one evaporation refrigerant flow channel L3, and the other evaporation refrigerant flow channel L4 described above may be implemented through an external pipeline. This is not limited in embodiments of this application.

The refrigerant substrate 130 includes at least one flow distribution structure. Each flow distribution structure includes a plurality of flow distribution channels. One end of a convergence flow channel H is configured to communicate with a condensation refrigerant outlet A₁₂ of each condenser plate heat exchanger 110. The other end of the convergence flow channel H is configured to communicate with one end of each flow distribution channel of each flow distribution structure. The other end of each flow distribution channel is configured to communicate with an evaporation refrigerant inlet A₂₁ of one evaporator plate heat exchanger 120. In other words, a quantity of flow distribution channels is equal to a quantity of evaporator plate heat exchangers 120.

In an example, a shape of a cross section of the flow distribution channel is a polygon, for example, a square. In another example, a shape of a cross section of the flow distribution channel is a circle, an arc, or an ellipse. In this way, the refrigerant in the flow distribution channel has small resistance and also has a small pressure drop.

In some embodiments, the flow distribution structure further includes a flow distribution head structure. The flow distribution head structure may enable refrigerants in the flow distribution channels to be even.

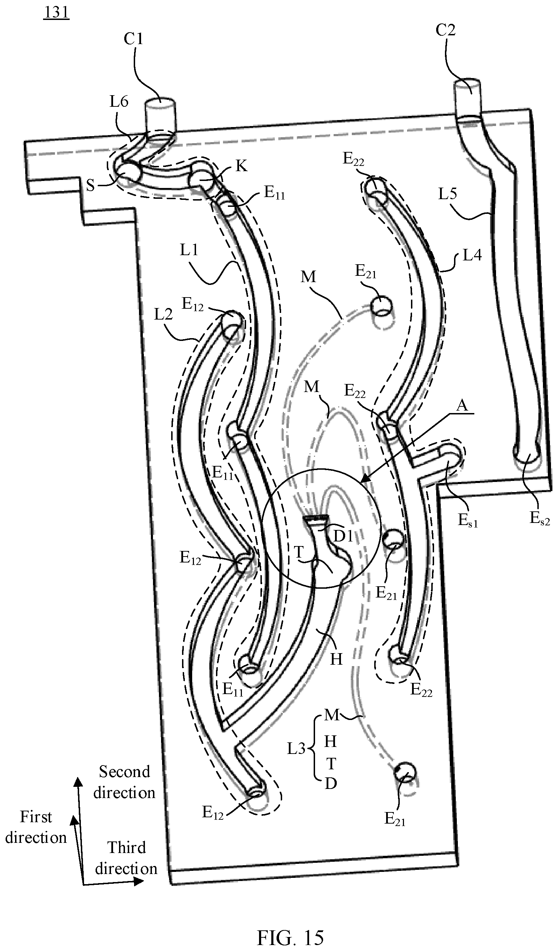

As shown in FIG. 15, FIG. 16, and FIG. 19, each flow distribution structure further includes a flow distribution head channel D1. The flow distribution head channel D1 is configured for the convergence flow channel H to communicate with the plurality of flow distribution channels M. A cross-sectional area of the flow distribution head channel D1 first decreases and then increases in a direction in which the flow distribution head channel D1 and each flow distribution channel M are arranged. In this way, after a refrigerant enters the flow distribution head channel D1, the refrigerant first shrinks slightly. Therefore, a speed increases, and pressure decreases. The speed reaches the maximum at a narrowest part of the flow distribution head channel D1. Then, the speed decreases, and the pressure increases. Like a nozzle, the refrigerant is sprayed into each flow distribution channel D1. Because the pressure is large, and a flow velocity of the refrigerant is high, refrigerants flowing into the flow distribution channels are even.

In some embodiments, a cross-sectional area of each flow distribution channel M is less than a cross-sectional area of the flow distribution head channel D1.

In some embodiments, an included angle between an axial direction of the flow distribution head channel D1 and a second direction is *θ*₁, and 0° ≤ *θ*₁ ≤ 30°. In this way, when the heat exchanger 100 is placed in the second direction, uneven flow distribution caused by gravity can be avoided.

It should be understood that the axial direction of the flow distribution head channel D1 may be understood as an extension direction of the flow distribution head channel.

It should be noted that the included angle between the axial direction and the second direction in this embodiment of this application may be understood as an included angle between the axial direction and the second direction in a clockwise direction or a counterclockwise direction.

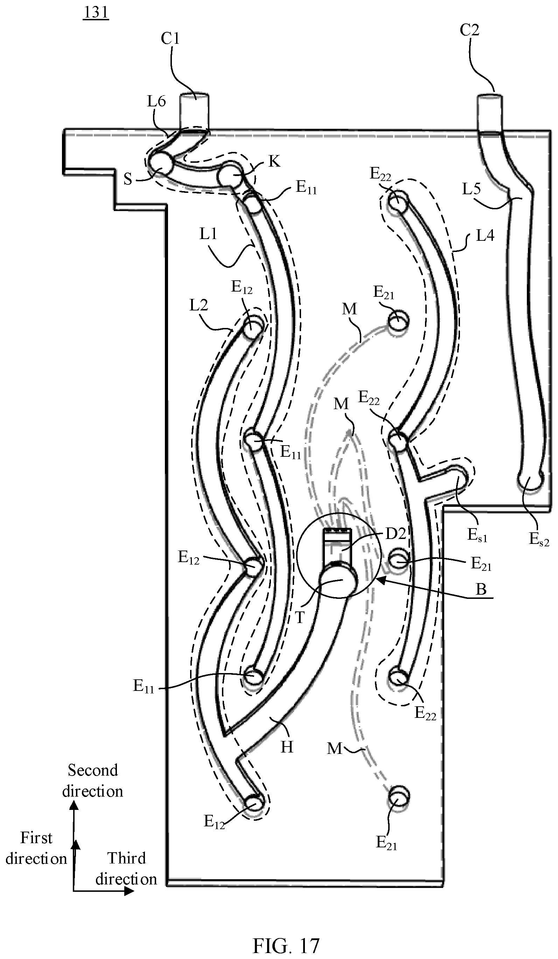

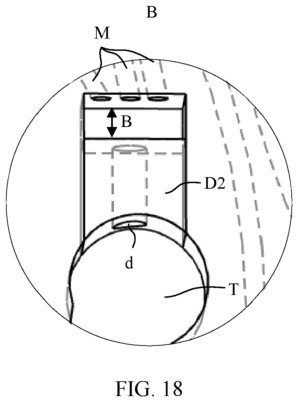

As shown in FIG. 17 and FIG. 18, each flow distribution structure further includes a flow guiding partition plate D2. The flow guiding partition plate D2 is configured to be embedded into the convergence flow channel H. A gap B exists at a joint between the flow guiding partition plate D2 and each flow distribution channel. The flow guiding partition plate D2 includes a flow guiding channel d. The flow guiding channel d is configured for the convergence flow channel H to communicate with the gap B. In this way, after a refrigerant enters the flow guiding channel d of the flow guiding partition plate D2, the refrigerant first shrinks slightly. Therefore, a speed increases, and pressure decreases. The speed reaches the maximum at a junction between an outlet of the flow guiding channel d and the gap B. Then, the speed decreases, and the pressure increases. Like a nozzle, the refrigerant is sprayed into each flow distribution channel. Because the pressure is large, and a flow velocity of the refrigerant is high, refrigerants flowing into the flow distribution channels are even.

For example, the flow guiding channel d may be a through hole that runs through the flow guiding partition plate D2 in an extension direction of the convergence flow channel H. For example, a shape of a cross-sectional area of the through hole may be any shape, for example, a circle, an ellipse, or a square.

In some embodiments, a distance between the flow guiding partition plate D2 and an end that is of the convergence flow channel H and that is away from the flow guiding partition plate D2 is greater than the gap. In other words, the flow guiding partition plate D2 is disposed close to each flow distribution channel M.

In some embodiments, an included angle between an axial direction of the flow guiding channel d and a second direction is *θ*₂, and 0° ≤ *θ*₂ ≤ 30°. In this way, when the heat exchanger 100 is placed in the second direction, uneven flow distribution caused by gravity can be avoided.

In some embodiments, a cross-sectional area of each flow distribution channel is less than a cross-sectional area of the convergence flow channel and a cross-sectional area of each refrigerant flow channel.

In an example, lengths of the flow distribution channels are approximately equal, and cross-sectional areas of the flow distribution channels are approximately the same. In another example, a length of each flow distribution channel and a cross-sectional area of each flow distribution channel are approximately in a positive correlation relationship. For example, a length of one flow distribution channel is less than a length of another flow distribution channel, and a cross-sectional area of the one flow distribution channel is less than a cross-sectional area of the another flow distribution channel. This can ensure that pressure drops of the flow distribution channels are as similar as possible.

In some embodiments, an included angle between an axial direction of the flow distribution channel and the second direction is *θ*₃, and 0° ≤ *θ*₃ ≤ 30°. In this way, when the heat exchanger 100 is placed in the second direction, uneven flow distribution caused by gravity can be avoided.

In some embodiments, the refrigerant substrate 130 includes two side surfaces that are arranged back to each other in the second direction. Distances between one of the two side surfaces and joints between the flow distribution channels and the convergence flow channel are equal. In other words, the joints between the flow distribution channels M and the convergence flow channel H are aligned in a third direction. In this way, the refrigerant in the convergence flow channel H can almost reach each flow distribution channel at the same time, so that the refrigerant is evenly distributed to the flow distribution channels.

In some embodiments, a quantity of condenser plate heat exchangers 110 included in the heat exchanger 100 is equal to a quantity of evaporator plate heat exchangers 120.

The heat management system further includes a compressor. The compressor is configured to provide heat exchange power for the heat exchanger 100. The compressor is arranged on a side that is of the refrigerant substrate 130 and that is away from the condenser plate heat exchanger 110. As shown in FIG. 7, FIG. 9, FIG. 11 to FIG. 13, FIG. 15, and FIG. 17, the refrigerant substrate 130 includes two side surfaces that are arranged back to each other in the second direction. One of the two side surfaces includes a gas inlet C1 and a gas outlet C2. The gas inlet C1 is configured for the one condensation refrigerant flow channel L1 to communicate with a discharge port of the compressor. The gas outlet C2 is configured for the other evaporation refrigerant flow channel L4 to communicate with a suction port of the compressor.

As shown in FIG. 7, FIG. 9, and FIG. 11 to FIG. 13, the refrigerant substrate 130 further includes a first gas flow channel L5 and a second gas flow channel L6. The first gas flow channel L5 is configured to communicate with the gas outlet C2. The second gas channel L6 is configured to communicate with both the gas inlet C1 of the compressor 140 and the first refrigerant flow channel L1. In this way, the compressor can suck a low-temperature and low-pressure gaseous refrigerant in each evaporator 120 from the first gas flow channel L5 through the gas outlet C2 of the refrigerant substrate 130, compress the low-temperature and low-pressure gaseous refrigerant into a high-temperature and high-pressure gaseous refrigerant, and discharge the high-temperature and high-pressure gaseous refrigerant into the second gas flow channel L6 through the gas inlet C1 of the refrigerant substrate 130, so that the high-temperature and high-pressure gaseous refrigerant flows into the first refrigerant flow channel L1.

In some embodiments, as shown in FIG. 6, a pressure-temperature sensor S is further disposed on a side that is of the first gas flow channel L5 and that is close to the gas inlet C1 of the refrigerant substrate 130. The pressure-temperature sensor S is configured to monitor in real time pressure and a temperature of the high-temperature and high-pressure gaseous refrigerant discharged by the compressor.

In some embodiments, as shown in FIG. 6, a high-pressure switch K is further disposed in the first gas flow channel L5. The high-pressure switch K is configured to: when pressure of the high-temperature and high-pressure gaseous refrigerant in the first gas flow channel L5 is greater than a threshold, prevent the high-temperature and high-pressure gaseous refrigerant in the first gas flow channel L5 from flowing into the one condensation refrigerant flow channel L1.

In some embodiments, the heat management system further includes a gas-liquid separator. The compressor is arranged on a side that is of the refrigerant substrate 130 and that is away from the condenser plate heat exchanger 110. As shown in FIG. 7, FIG. 9, FIG. 11 to FIG. 13, FIG. 15, and FIG. 17, the refrigerant substrate 130 includes an inlet Eₛ₁ of the gas-liquid separator and an outlet Eₛ₂ of the gas-liquid separator. The inlet Eₛ₁ of the gas-liquid separator is configured for the other evaporation refrigerant flow channel L4 to communicate with the liquid separator. The outlet Eₛ₂ of the gas-liquid separator is configured for the suction port of the compressor to communicate with the liquid separator. In this way, the gas-liquid separator can separate a gas-liquid two-phase refrigerant that flows out of the evaporator plate heat exchanger 120, and send a gaseous refrigerant to the compressor.

As shown in FIG. 6, the third refrigerant flow channel L3 includes a convergence hole H and at least one flow distribution structure. One end of the convergence hole H is configured to communicate with a condensation refrigerant outlet A₁₂ of each condenser plate heat exchanger 110. Each flow distribution structure includes a flow guiding hole D and a plurality of flow distribution holes M. Each flow distribution structure includes a flow guiding hole D and a plurality of flow distribution holes M.

In each flow distribution structure, one end of the flow guiding hole D is configured to communicate with the other end of the convergence hole H, the other end of the flow guiding hole D is configured to communicate with one end of each flow distribution hole M, and the other end of each flow distribution hole M is configured to communicate with an evaporation refrigerant inlet A₂₁ of one evaporator plate heat exchanger 120.

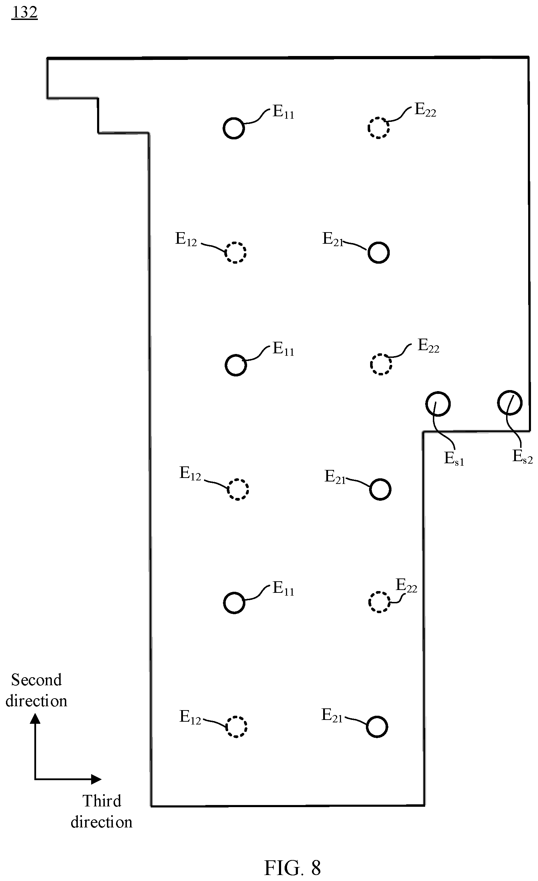

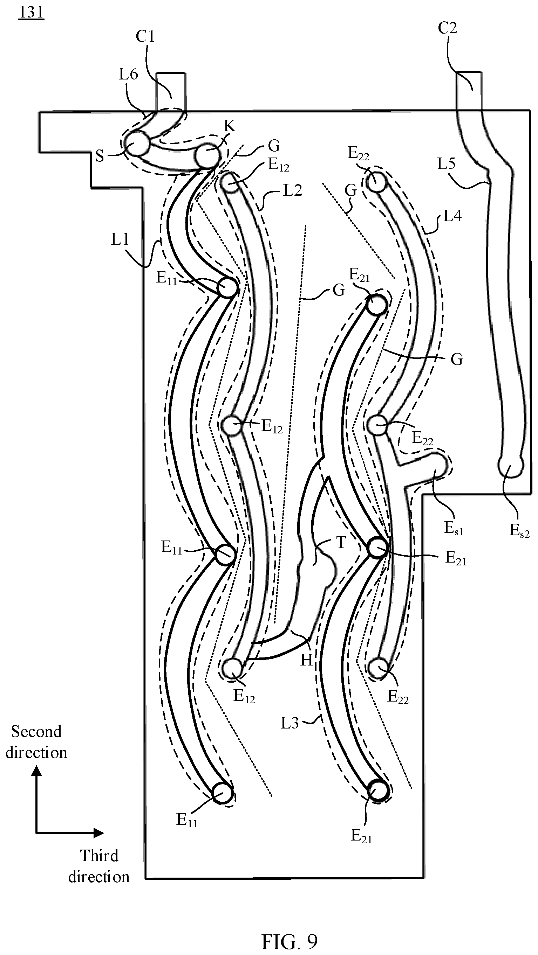

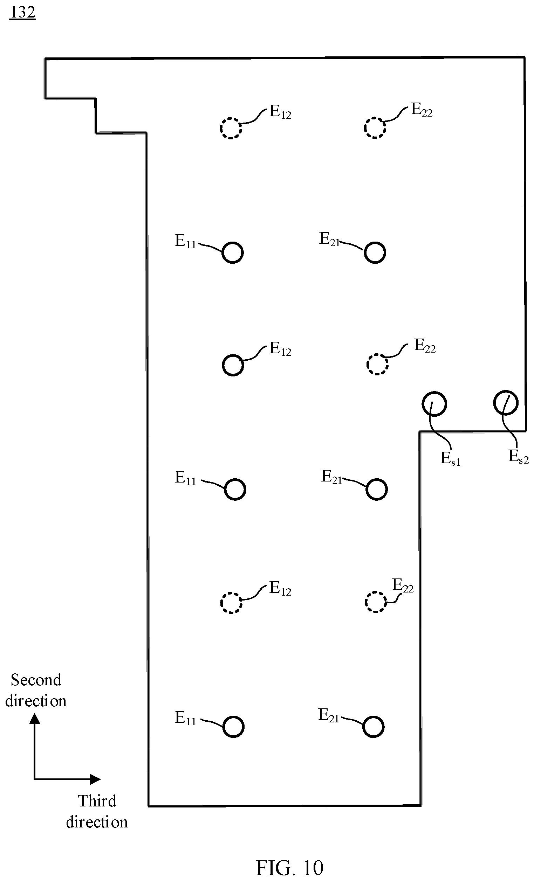

In some embodiments, the refrigerant substrate 130 includes two substrates. One substrate 131 is arranged on a side that is of the other substrate 132 and that is away from the evaporator plate heat exchanger 110. For example, the refrigerant substrate 130 includes the substrate 131 shown in FIG. 7 and the other substrate 132 shown in FIG. 8. For another example, the refrigerant substrate 130 includes the substrate 131 shown in FIG. 9 and the other substrate 132 shown in FIG. 10. For another example, the refrigerant substrate 130 includes the substrate 131 shown in FIG. 13 and the other substrate 132 shown in FIG. 4.

The following describes forming manners of the two groups of condensation holes E₁₁ and E₁₂, the two groups of evaporation holes E₂₁ and E₂₂, the two condensation refrigerant flow channels L1 and L2, the two evaporation refrigerant flow channels L3 and L4, and the convergence flow channel H on the refrigerant substrate 130.

1. A refrigerant flow channel is distributed on one of the two substrates 131. In this way, the refrigerant flow channel only needs to be processed on the substrate 131, and the two substrates are welded and assembled into the refrigerant substrate. This simplifies a processing process of the refrigerant substrate.

For example, a groove corresponding to the one condensation refrigerant flow channel L1, a groove corresponding to the other condensation refrigerant flow channel L2, a groove corresponding to the other evaporation refrigerant flow channel L4, a groove corresponding to the first gas flow channel L5, a groove corresponding to the second gas flow channel L6, and a groove corresponding to the convergence flow channel H are separately processed on a side surface that is of the substrate 131 and that faces the other substrate 132. In this way, after the two substrates are welded and assembled into the refrigerant substrate, the groove, corresponding to the one condensation refrigerant flow channel L1, on the substrate 131 and a side surface that is of the other substrate 132 and that faces the substrate 131 form the one condensation refrigerant flow channel L1; the groove corresponding to the other condensation refrigerant flow channel L2 and the side surface that is of the other substrate 132 and that faces the substrate 131 form the other condensation refrigerant flow channel L2; the groove corresponding to the other evaporation refrigerant flow channel L4 and the side surface that is of the other substrate 132 and that faces the substrate 131 form the other evaporation refrigerant flow channel L4; the groove corresponding to the first gas flow channel L5 and the side surface that is of the other substrate 132 and that faces the substrate 131 form the first gas flow channel L5; the groove corresponding to the second gas flow channel L6 and the side surface that is of the other substrate 132 and that faces the substrate 131 form the second gas flow channel L6; and the groove corresponding to the convergence flow channel H and the side surface that is of the other substrate 132 and that faces the substrate 131 form the convergence flow channel H.

In addition, each condensation hole that runs through the other substrate 132 in a thickness direction of the other substrate 132 is processed on the other substrate 132, and each condensation hole corresponding to each condensation hole on the other substrate 132 is processed on the substrate 131.

In an embodiment in which the refrigerant substrate includes at least one flow distribution structure, a plurality of flow distribution holes are processed on a groove wall of a convergence groove as flow distribution channels.

2. A refrigerant flow channel is distributed on two substrates. In this way, a part of the refrigerant flow channel is processed on the two substrates at the same time, and the two substrates are welded and assembled into the refrigerant substrate. This reduces a processing time of the refrigerant substrate.

For example, a groove corresponding to a part of the one condensation refrigerant flow channel L1, a groove corresponding to a part of the other condensation refrigerant flow channel L2, a groove corresponding to a part of the other evaporation refrigerant flow channel L4, a groove corresponding to a part of the first gas flow channel L5, a groove corresponding to a part of the second gas flow channel L6, and a groove corresponding to a part of the convergence flow channel H are separately processed on a side surface that is of the substrate 131 and that faces the other substrate 132. In addition, a groove corresponding to a remaining part of the one condensation refrigerant flow channel L1, a groove corresponding to a remaining part of the other condensation refrigerant flow channel L2, a groove corresponding to a remaining part of the other evaporation refrigerant flow channel L4, a groove corresponding to a remaining part of the first gas flow channel L5, a groove corresponding to a remaining part of the second gas flow channel L6, and a groove corresponding to a remaining part of the convergence flow channel H are separately processed on a side surface that is of the other substrate 132 and that faces the substrate 131. In addition, in an arrangement direction of the two substrates, a projection of the groove, corresponding to the part of the one condensation refrigerant flow channel L1, on the substrate 131 overlaps a projection of the groove, corresponding to the remaining part of the one condensation refrigerant flow channel L1, on the other substrate 132; a projection of the groove, corresponding to the part of the other condensation refrigerant flow channel L2, on the substrate 131 overlaps a projection of the groove, corresponding to the remaining part of the other condensation refrigerant flow channel L2, on the other substrate 132; a projection of the groove, corresponding to the part of the other evaporation refrigerant flow channel L4, on the substrate 131 overlaps a projection of the groove, corresponding to the remaining part of the other evaporation refrigerant flow channel L4, on the other substrate 132; a projection of the groove, corresponding to the part of the first gas flow channel L5, on the substrate 131 overlaps a projection of the groove, corresponding to the remaining part of the first gas flow channel L5, on the other substrate 132; a projection of the groove, corresponding to the part of the second gas flow channel L6, on the substrate 131 overlaps a projection of the groove, corresponding to the remaining part of the second gas flow channel L6, on the other substrate 132; and a projection of the groove, corresponding to the part of the convergence flow channel H, on the substrate 131 overlaps a projection of the groove, corresponding to the remaining part of the convergence flow channel H, on the other substrate 132.

In this way, after the two substrates are welded and assembled into the refrigerant substrate, the groove, corresponding to the part of the one condensation refrigerant flow channel L1, on the substrate 131 is fastened to the groove, corresponding to the remaining part of the one condensation refrigerant flow channel L1, on the other substrate 132 to form the one condensation refrigerant flow channel L1. The groove, corresponding to the part of the other condensation refrigerant flow channel L2, on the substrate 131 is fastened to the groove, corresponding to the remaining part of the other condensation refrigerant flow channel L2, on the other substrate 132 to form the other condensation refrigerant flow channel L2. The groove, corresponding to the part of the other evaporation refrigerant flow channel L4, on the substrate 131 is fastened to the groove, corresponding to the remaining part of the other evaporation refrigerant flow channel L4, on the other substrate 132 to form the other evaporation refrigerant flow channel L4. The groove, corresponding to the part of the first gas flow channel L5, on the substrate 131 is fastened to the groove, corresponding to the remaining part of the first gas flow channel L5, on the other substrate 132 to form the first gas flow channel L5. The groove, corresponding to the part of the second gas flow channel L6, on the substrate 131 is fastened to the groove, corresponding to the remaining part of the second gas flow channel L6, on the other substrate 132 to form the second gas flow channel L6. The groove, corresponding to the part of the convergence flow channel H, on the substrate 131 is fastened to the groove, corresponding to the remaining part of the convergence flow channel H, on the other substrate 132 to form the convergence flow channel H.

In addition, each condensation hole that runs through the other substrate 132 in a thickness direction of the other substrate 132 is processed on the other substrate 132, and each condensation hole corresponding to each condensation hole on the other substrate 132 is processed on the substrate 131.

In an embodiment in which the refrigerant substrate includes at least one flow distribution structure, a plurality of flow distribution holes are processed on a groove wall of a convergence groove as flow distribution channels.

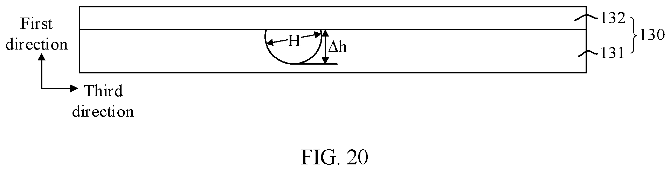

In some embodiments, in an embodiment in which a shape of a cross section of each flow channel is a circle, an arc, or an ellipse, and the flow channels are distributed on the substrate 131 in a form of a groove, as shown in FIG. 20, a size Δh of each flow channel in the first direction is less than or equal to a maximum size H of each refrigerant flow channel. This ensures that each flow distribution channel formed by buckling the two substrates is closed.

The compressor compresses a low-temperature and low-pressure gaseous refrigerant into a high-temperature and high-pressure gaseous refrigerant, and discharges the high-temperature and high-pressure gaseous refrigerant into the second gas flow channel L6 through the gas inlet C1 of the refrigerant substrate 130, so that the high-temperature and high-pressure gaseous refrigerant flows into the one condensation refrigerant flow channel L1. The high-temperature and high-pressure gaseous refrigerant entering the one condensation refrigerant flow channel L1 enters each condenser plate heat exchanger 110 through a condensation refrigerant inlet A₁₁ of each condenser plate heat exchanger 110. After flowing into each condenser plate heat exchanger 110, the high-temperature and high-pressure gaseous refrigerant releases some heat and is converted into a supercooled liquid refrigerant. In this case, the supercooled liquid refrigerant flowing out of a condensation refrigerant outlet A₂₁ of each condenser plate heat exchanger 110 flows into the other condensation refrigerant flow channel L2. Further, the supercooled liquid refrigerant in the other condensation refrigerant flow channel L2 flows into the one evaporation refrigerant flow channel L3 through the convergence channel H, and the supercooled liquid refrigerant entering the one evaporation refrigerant flow channel L3 enters each evaporator plate heat exchanger 120 through an evaporation refrigerant inlet A₂₁ of each evaporator plate heat exchanger 120; or the supercooled liquid refrigerant in the other condensation refrigerant flow channel L2 flows into each flow distribution channel through the flow distribution structure in the convergence channel H, and flows into each evaporator plate heat exchanger 120 through each flow distribution channel. After flowing into each evaporator plate heat exchanger 120, the supercooled liquid refrigerant absorbs some heat and is converted into a low-temperature and low-pressure gas-liquid mixed refrigerant. In this case, the low-temperature and low-pressure gas-liquid mixed refrigerant flowing out of an evaporation refrigerant outlet A₂₂ of each evaporator plate heat exchanger 120 flows into the other evaporation refrigerant flow channel L4. In an embodiment in which there is not a gas-liquid separator, the gas-liquid mixed refrigerant flowing into the other evaporation refrigerant flow channel L4 flows into the compressor again through the gas outlet C2 of the refrigerant substrate 130, to complete a heat exchange cycle. In an embodiment in which there is a gas-liquid separator, the gas-liquid mixed refrigerant flowing into the other evaporation refrigerant flow channel L4 flows into the gas-liquid separator through the inlet Eₛ₁ of the gas-liquid separator of the refrigerant substrate 130. A gaseous refrigerant is separated by using the gas-liquid separator, flows into the first gas flow channel L5 through the outlet Eₛ₂ of the gas-liquid separator of the refrigerant substrate 130, and flows into the compressor again through the gas inlet C1 communicating with the first gas flow channel L5, to complete a heat exchange cycle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A heat exchanger, wherein the heat exchanger comprises at least one condenser plate heat exchanger, a plurality of evaporator plate heat exchangers, and a refrigerant substrate, each condenser plate heat exchanger and each evaporator plate heat exchanger are arranged on a same side of the refrigerant substrate in a first direction, a side surface that is of each condenser plate heat exchanger and that faces the refrigerant substrate comprises a condensation refrigerant outlet, and a side surface that is of each evaporator plate heat exchanger and that faces the refrigerant substrate comprises an evaporation refrigerant inlet; and
the refrigerant substrate comprises a convergence flow channel and at least one flow distribution structure, each flow distribution structure comprises a plurality of flow distribution channels, one end of the convergence flow channel is configured to communicate with the condensation refrigerant outlet of each condenser plate heat exchanger, the other end of the convergence flow channel is configured to communicate with one end of each flow distribution channel, and the other end of each flow distribution channel is configured to communicate with an evaporation refrigerant inlet of one evaporator plate heat exchanger.

2. The heat exchanger according to claim 1, wherein the refrigerant substrate comprises two substrates that are arranged opposite to each other in the first direction, a side surface that is of one substrate and that faces the other substrate comprises a convergence groove and at least one group of flow distribution grooves, each group of flow distribution grooves comprises a plurality of flow distribution grooves, the convergence groove communicates with each flow distribution groove, the convergence groove and a side surface that is of the other substrate and that faces the substrate form the convergence flow channel, and each flow distribution groove and the side surface that is of the other substrate and that faces the substrate form the flow distribution channel.

3. The heat exchanger according to claim 1 or 2, wherein a cross section of each flow distribution groove is arc-shaped.

4. The heat exchanger according to any one of claims 1 to 3, wherein each flow distribution structure further comprises a flow distribution head channel, the flow distribution head channel is configured for the convergence flow channel to communicate with the plurality of flow distribution channels, and a cross-sectional area of the flow distribution head channel first decreases and then increases in a direction in which the flow distribution head channel and each flow distribution channel are arranged.

5. The heat exchanger according to claim 4, wherein a cross-sectional area of each flow distribution channel is less than the cross-sectional area of the flow distribution head channel.

6. The heat exchanger according to claim 4 or 5, wherein an included angle between an axial direction of the flow distribution head channel and a second direction is *θ*₁, 0° ≤ *θ*₁ ≤ 30°, and the second direction is perpendicular to the first direction.

7. The heat exchanger according to any one of claims 1 to 3, wherein each flow distribution structure further comprises a flow guiding partition plate, the flow guiding partition plate is configured to be embedded into the convergence flow channel, and a gap exists at a joint between the flow guiding partition plate and each flow distribution channel; and
the flow guiding partition plate comprises a flow guiding channel, and the flow guiding channel is configured for the convergence flow channel to communicate with the gap.

8. The heat exchanger according to claim 7, wherein a cross-sectional area of each flow distribution channel is less than a cross-sectional area of the convergence flow channel; and
a distance between the flow guiding partition plate and an end that is of the convergence flow channel and that is away from the flow guiding partition plate is greater than the gap.

9. The heat exchanger according to claim 7 or 8, wherein an included angle between an axial direction of the flow guiding channel and a second direction is *θ*₂, and 0° ≤ *θ*₂ ≤ 30°.

10. The heat exchanger according to any one of claims 1 to 9, wherein lengths of the flow distribution channels are equal, and cross-sectional areas of the flow distribution channels are the same; or
a length of one flow distribution channel is less than a length of another flow distribution channel, and a cross-sectional area of the one flow distribution channel is less than a cross-sectional area of the another flow distribution channel.

11. The heat exchanger according to any one of claims 1 to 10, wherein an included angle between an axial direction of the flow distribution channel and the second direction is *θ*₃, and 30° ≤ *θ*₃ ≤ 30°; and
the refrigerant substrate comprises two side surfaces that are arranged back to each other in the second direction, and distances between one of the two side surfaces and joints between the flow distribution channels and the convergence flow channel are equal.

12. The heat exchanger according to any one of claims 1 to 11, wherein the heat exchanger further comprises at least one throttling element, each throttling element is distributed in the convergence flow channel, and each throttling element is configured to control a flow rate flowing from the convergence flow channel into one flow distribution structure.

13. The heat exchanger according to claim 12, wherein the throttling element is a throttling flow channel, the throttling flow channel is configured for the convergence flow channel to communicate with the flow distribution structure, and a cross-sectional area of a joint between each throttling flow channel and the convergence flow channel is equal to a cross-sectional area of a joint between each throttling flow channel and the flow distribution structure.

14. The heat exchanger according to claim 13, wherein a cross-sectional area of a middle part of each throttling flow channel is less than the cross-sectional area of the joint between each throttling flow channel and the convergence flow channel and the cross-sectional area of the joint between each throttling flow channel and the flow distribution structure.

15. An energy storage device, wherein the energy storage device comprises at least one battery cell and the heat exchanger according to any one of claims 1 to 14, and the heat exchanger is configured to exchange heat with each battery cell.
